(19) Europäisches Patentamt
European Patent Office
Office européen des brevets

(11) EP 4 414 754 A1

(12) EUROPÄISCHE PATENTANMELDUNG

(43) Veröffentlichungstag:
14.08.2024  Patentblatt 2024/33

(21) Anmeldenummer: 23155484.1

(22) Anmeldetag: 08.02.2023

(51) Internationale Patentklassifikation (IPC):
G01V 8/12 (2006.01)          G01V 8/14 (2006.01)
G01V 8/20 (2006.01)          G01V 8/22 (2006.01)

(52) Gemeinsame Patentklassifikation (CPC):
G01V 8/12; G01V 8/14; G01V 8/20; G01V 8/22

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Leuze electronic GmbH + Co. KG
73277 Owen/Teck (DE)

(72) Erfinder:
• Kamuf, Matthias
81373 München (DE)

• Wagner, Markus
86949 Windach (DE)
• Feller, Bernhard
86316 Friedberg (DE)
• Quapil, Gerald
73277 Owen/Teck (DE)

(74) Vertreter: Ruckh, Rainer Gerhard
Patentanwaltskanzlei Ruckh
Jurastraße 1
73087 Bad Boll (DE)

(54) **OPTISCHER SENSOR**

(57) Die Erfindung betrifft ein Verfahren zum Betrieb eines optischen Sensors (1) mit wenigstens einem Lichtstrahlen (3) emittierenden Sender (4), wenigstens einem Lichtstrahlen (3) empfangenden Empfänger (6) und einer Auswerteeinheit (9), in welcher abhängig von Empfangssignalen des Empfängers (6) ein Objektfeststellungssignal generiert wird. Die Lichtstrahlen (3) sind mit einer Folge von Signalabschnitten (11) moduliert. Empfangsseitig sind entsprechende Signalabschnitte (11) hinterlegt. In der Auswerteeinheit (9) wird das Empfangssignal des Empfängers (6) mit den empfangsseitig hinterlegten Signalabschnitten (11) korreliert und abhängig von einem dadurch erhaltenen Korrelationsergebnis (D) beurteilt, ob die vom Sender (4) emittierten Lichtstrahlen (3) über eine Messstrecke zum Empfänger (6) geführt sind oder nicht.

Fig. 1

EP 4 414 754 A1

**Beschreibung**

Die Erfindung betrifft einen optischen Sensor.

Der optische Sensor dient insbesondere zur Erfassung von Objekten in einem Überwachungsbereich. Hierzu umfasst der optische Sensor wenigstens einen Lichtstrahlen emittierenden Sender und einen Lichtstrahlen empfangenden Empfänger. Weiterhin umfasst der optische Sensor eine Auswerteeinheit, in welcher in Abhängigkeit von Empfangssignalen des Empfängers ein Objektfeststellungssignal generiert wird.

Typischerweise arbeitet der optische Sensor nach dem Lichtschrankenprinzip, so dass eine Objektdetektion dadurch erfolgt, dass eine Unterbrechung des Strahlengangs der Lichtstrahlen, die den Überwachungsbereich passieren, registriert wird.

Für den Fall, dass der optische Sensor nur einen Sender oder Empfänger aufweist, ist dieser als Lichtschranke oder Reflexionslichtschranke ausgebildet. Weist der optische Sensor mehrere Paare von Sendern und Empfängern auf, ist dieser als Lichtvorhang oder Reflex-Lichtvorhang ausgebildet.

Generell besteht ein Problem bei derartigen optischen Sensoren darin, dass Fremdlichteinflüsse, insbesondere von Störlichtquellen in den optischen Sensor eingestrahltes Störlicht zu Fehlfunktionen des optischen Sensors führen kann. Dabei kann durch Störlichteinstrahlungen beispielsweise ein freier Überwachungsbereich vorgetäuscht werden, obwohl sich ein Objekt im Überwachungsbereich befindet.

Um Fremdlichteinflüsse zu minimieren, ist es bekannt, dass der Sender des optischen Sensors Lichtstrahlen in Form von kodierten Lichtimpulsen emittiert. Weiterhin ist es bekannt, die Lichtstrahlen mit einer Modulationsfrequenz zu modulieren.

Es hat sich gezeigt, dass trotz dieser Maßnahmen oft die gewünschte Störlichtfestigkeit bei dem optischen Sensor nicht erzielt wird.

Der Erfindung liegt die Aufgabe zugrunde, einen optischen Sensor mit weiter verbesserter Störlichtfestigkeit bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zum Betrieb eines optischen Sensors mit wenigstens einem Lichtstrahlen emittierenden Sender, wenigstens einem Lichtstrahlen empfangenden Empfänger und einer Auswerteeinheit, in welcher abhängig von Empfangssignalen des Empfängers ein Objektfeststellungssignal generiert wird. Die Lichtstrahlen sind mit einer Folge von Signalabschnitten moduliert. Empfangsseitig sind entsprechende Signalabschnitte hinterlegt. In der Auswerteeinheit wird das Empfangssignal des Empfängers mit den empfangsseitig hinterlegten Signalabschnitten korreliert und abhängig von einem dadurch erhaltenen Korrelationsergebnis beurteilt, ob die vom Sender emittierten Lichtstrahlen über eine Messstrecke zum Empfänger geführt sind oder nicht.

Die Erfindung betrifft auch ein entsprechendes Verfahren.

Der Grundgedanke der Erfindung besteht somit darin, zur Erfassung ob Lichtstrahlen des oder eines Senders über eine Messstrecke zum zugeordneten Empfänger gelangen, empfangsseitig nicht nur das Vorhandensein der Lichtstrahlen oder Lichtpulse der Lichtstrahlen am Empfänger geprüft wird. Vielmehr werden den Lichtstrahlen Signalabschnitte in Form von Modulationen aufgeprägt.

In der Auswerteeinheit werden zur Beurteilung, ob die Lichtstrahlen des Senders über die Messstrecke zum Empfänger geführt sind, dessen Empfangssignale mit in der Auswerteeinheit abgespeicherten Signalabschnitten, die den Signalabschnitten der Lichtstrahlen entsprechen, korreliert. Anhand des Korrelationsergebnisses kann sicher und zuverlässig beurteilt werden, ob das Empfangssignal durch die Lichtstrahlen des Senders generiert wurde oder durch Störlichteinstrahlung verursacht wurde. Damit wird eine signifikante Erhöhung der Störlichtfestigkeit bei der mit dem optischen Sensor durchgeführten Objekterkennung durchgeführt.

Gemäß einer vorteilhaften Ausführungsform bildet der Sender und der Empfänger eine Lichtschrankenanordnung aus.

Weist der optische Sensor mehrere Sender-Empfängerpaare auf, bildet der optische Sensor einen Lichtvorhang aus. Die Objektdetektion erfolgt nach dem Lichtschrankenprinzip.

Bei dieser Konfiguration befinden sich der Sender und Empfänger des oder jedes Sender-Empfängerpaars an gegenüberliegenden Rändern eines Überwachungsbereichs. Bei freiem Überwachungsbereich treffen bei jedem Sender-Empfängerpaar die die Messstrecken ausbildenden Lichtstrahlen des Senders auf den zugeordneten Empfänger, was anhand des Korrelationsergebnisses in der Auswerteeinheit registriert wird. Bei einem Objekteingriff im Überwachungsbereich wird der Strahlengang der Lichtstrahlen des oder wenigstens eines Sender-Empfängerpaars unterbrochen.

Gemäß einer weiteren vorteilhaften Ausführungsform bildet der Sender und der Empfänger eine Reflexions-Lichtschrankenanordnung aus.

Weist dieser optische Sensor mehrere Sender-Empfängerpaare auf, bildet dieser einen Reflex-Lichtvorhang aus. Der Sender und Empfänger des oder jedes Sender-Empfängerpaars sind dann an einem Rand des Überwachungsbereichs angeordnet. Am anderen Rand des Überwachungsbereichs befindet sich ein Reflektor. Bei freiem Überwachungsbereich gelangen die Lichtstrahlen des Senders eines Sender-Empfängerpaars ungehindert zum Reflektor und werden an diesem zurück zum zugeordneten Empfänger geführt. Bei einem Objekteingriff wird der Strahlengang der Lichtstrahlen wenigstens eines Senders unterbrochen.

Gemäß einer weiteren vorteilhaften Ausführungsform bildet der Sender und der Empfänger eine Lichttasteranordnung aus.

Auch in diesem Fall kann der optische Sensor mehrere Sender-Empfängerpaare aufweisen.

Der optische Sensor arbeitet in diesem Fall nach dem Lichttasterprinzip.

Nur wenn ein Objekt im Überwachungsbereich vorhanden ist, wird die Messstrecke eines Sender-Empfängerpaars gebildet, in dem vom Sender emittierte Lichtstrahlen vom Objekt zum zugeordneten Empfänger reflektiert werden.

Gemäß einer vorteilhaften Ausführungsform werden Signalabschnitte für die Lichtstrahlen digital erzeugt, analog nachbearbeitet und dann den Lichtstrahlen der oder eines Senders aufgeprägt.

Vorteilhaft werden dem oder den Sendern eine Signalgenerierungseinheit in Form eines Schieberegisters, eines rückgekoppelten Schieberegisters, eines Mikroprozessors, eines FPGA oder eines ASIC zugeordnet, in welcher digitale Signalabschnitte generiert werden.

Bei Schieberegistern ist eine lineare Anordnung von Schieberegisterelementen vorhanden. Im Gegensatz hierzu sind bei rückgekoppelten Schieberegistern Leitungen vorgesehen, die Schieberegisterelemente mit vorhergehenden Schieberegisterelementen verknüpfen. Solche rückgekoppelten Schieberegister können sowohl in Hardware in ASICs oder FPGAs als auch in Software realisiert werden.

Weiterhin ist dem oder den Sendern eine Nachbearbeitungseinheit zugeordnet, in welcher eine analoge Nachverarbeitung der digitalen Signalabschnitte durchgeführt wird.

Dabei weist die Nachbearbeitungseinheit einen Bandpassfilter oder einen Tiefpassfilter auf.

Zudem ist es zweckmäßig, wenn in der Nachbearbeitungseinheit ein Offset erzeugt wird, durch welchen unipolare analoge Signalabschnitte erhalten werden.

Daran angepasst ist dem oder jedem Empfänger eine Vorverarbeitungseinheit zugeordnet, in welcher eine analoge Vorverarbeitung von Empfangssignalen durchgeführt wird.

Vorteilhaft weist die Vorverarbeitungseinheit eine Filtereinheit auf.

Beispielsweise wird mit der Filtereinheit eine Integration der Empfangssignale durchgeführt. Die Filtereinheit kann beispielsweise ein Bandpass- oder Antialiasing-Filter sein.

Zweckmäßig wird mit der Vorverarbeitungseinheit ein Offset erzeugt, durch welchen unipolare Empfangssignale erhalten werden. Erfolgt im Empfänger eine Synchronisierung, kann mit diesem Offset kompensiert werden, um damit in den späteren Empfangsabschnitten präzisere Ergebnisse zu bekommen.

Gemäß einer vorteilhaften Ausführungsform weist die Auswerteeinheit eine Korrelationseinheit auf, in welcher das Empfangssignal des Empfängers mit in der Korrelationseinheit hinterlegten Signalabschnitten korreliert wird. Die Korrelation kann unipolar oder bipolar erfolgen.

In der Korrelationseinheit erfolgt eine digitale Signalverarbeitung zur Auswertung der Empfangssignale und zur Generierung des Korrelationsergebnisses.

Vorteilhaft ist die Korrelationseinheit digital ausgeführt, z.B. in einem FPGA oder in Softwaremodulen in einem Mikroprozessor.

Gemäß einer besonders vorteilhaften Ausgestaltung sind die Signalabschnitte in Form von Pseudonoise-Sequenzen ausgebildet.

Mit diesen Pseudonoise-Sequenzen wird eine besonders hohe Störfestigkeit gegenüber Störlichteinstrahlungen erhalten, weil die Störsignale typischerweise nicht den Pseudonoise-Sequenzen entsprechen.

Zweckmäßig sind die Pseudonoise-Sequenzen Barker-Sequenzen, Hadamard-Walsh-Sequenzen, Kasami-Sequenzen, M-Sequenzen, Gold-Sequenzen oder Willard-Codes.

Die Störfestigkeit gegenüber Störlichteinstrahlungen kann erhöht werden, indem die Signalabschnitte durch Chirps zeitlich veränderlich sind.

Die Signalabschnitte sind dabei in definierter Weise zeitlich veränderlich. Werden Lichtstrahlen in Form von Lichtimpulsen emittiert, ändern sich durch die Chirps die Pulsbreiten der Lichtimpulse und/oder Pulsabstände zwischen den Lichtimpulsen durch die Chirps. Werden den Lichtstrahlen Modulationen in Form von Amplitudenmodulationen aufgeprägt, können mit den Chirps die Frequenzen oder Phasen der Amplitudenmodulationen geändert werden.

Insbesondere können die Signalabschnitte lineare oder logarithmische Chirps sein.

Die Signalabschnitte werden generell mittels der Chirps in definierter Weise geändert, wobei die so zeitlich geänderten Signalabschnitte empfangsseitig, insbesondere in der Korrelationseinheit abgespeichert, so dass eine entsprechend zeitabhängige Korrelation des Empfangssignals mit den hinterlegten Signalabschnitten durchgeführt wird.

Gemäß einer ersten Variante wird in der Auswerteeinheit als Objektfeststellungssignal ein binäres Schaltsignal generiert, dessen Schaltzustände angeben, ob die oder wenigstens eine Messstrecke unterbrochen ist oder nicht.

In diesem Fall wird der optische Sensor zu Überwachungszwecken eingesetzt, indem mit dem optischen Sensor festgestellt wird, ob ein Objekt in einem Überwachungsbereich vorhanden ist oder nicht.

Gemäß einer zweiten Variante weist der optische Sensor mehrere Messstrecken ausbildende Sender-Empfängerpaare auf. Durch Auswertung, welche der Messstrecken unterbrochen sind oder nicht, werden als Objektfeststellungssignale Abmessungen von Objekten bestimmt.

In diesem Fall wird der optische Sensor für Messaufgaben eingesetzt, um z.B. Konturen, Strukturen oder Größen von Objekten zu erfassen.

Bei optischen Sensoren mit mehreren Sender-Empfängerpaaren, insbesondere bei Lichtvorhängen, bilden die Lichtstrahlen wenigstens eines Sender-Empfängerpaars einen Synchronisationsstrahl. Anhand dessen werden die Sender und Empfänger optisch synchronisiert, wobei der Synchronisationsstrahl anhand seiner Signalabschnitte identifizierbar ist.

Die Identifizierung des Synchronisationsstrahls anhand der Signalabschnitte ist besonders sicher und zuverlässig.

Gemäß einer vorteilhaften Weiterbildung der Erfindung wird mittels der Signalabschnitte eine Datenübertragung von Codes durchgeführt.

Der optische Sensor kann somit neben der Durchführung von Objektdetektionen auch als optisches Datenübertragungssystem genutzt werden.

Gemäß einer vorteilhaften Ausführungsform werden in der Korrelationseinheit Signalabschnitte parallel ausgewertet.

Durch die parallele Auswertung kann der Zeitaufwand bei der Signalauswertung reduziert werden oder zusätzliche Informationen parallel bereitgestellt werden.

Mit dem erfindungsgemäßen Korrelationsverfahren zur Signalauswertung kann insbesondere die Gefahr einer Beeinträchtigung des optischen Sensors dadurch, dass in dessen Empfänger Lichtstrahlen benachbarter optischer Sensoren eingestrahlt werden, verringert werden.

Dies wird vorteilhaft dadurch erreicht, dass die Signalabschnitte sich von Signalabschnitten anderer optischer Sensoren unterscheiden und nur der erwartete Signalabschnitt ein deutliches Korrelationsergebnis liefert. Signalabschnitte anderer Sensoren erzeugen jedoch kein oder nur ein weniger ausgeprägtes Korrelationsergebnis.

Alternativ oder zusätzlich können sich Lücken zwischen Signalabschnitten eindeutig von Lücken zwischen Signalabschnitten anderer optischer Sensoren unterscheiden.

Die Erfindung wird im Folgenden anhand der Zeichnungen erläutert. Es zeigen:

Figur 1: Ausführungsbeispiel des erfindungsgemäßen optischen Sensors in Form einer Lichtschranke.

Figur 2: Ausführungsbeispiel des erfindungsgemäßen optischen Sensors in Form eines Lichtvorhangs.

Figur 3a-b: Ausführungsbeispiele des erfindungsgemäßen optischen Sensors in Form einer Reflexions-Lichtschranke.

Figur 4: Ausführungsbeispiel des erfindungsgemäßen optischen Sensors in Form einer Lichttasters.

Figur 5: Beispiel einer von einem Sender des optischen Sensors emittierten Folge von Signalabschnitten.

Figur 6: Beispiel einer Senderansteuerung für einen Sender des optischen Sensors.

Figur 7: Beispiel einer empfangsseitigen Schaltungsanordnung des optischen Sensors.

Figuren 8a-c: Zeitdiagramme für ein erstes Ausführungsbeispiel einer Signalauswertung.

Figuren 9a-c: Zeitdiagramme für ein zweites Ausführungsbeispiel einer Signalauswertung.

Figuren 10a-e: Zeitdiagramme für ein drittes Ausführungsbeispiel einer Signalauswertung.

Figur 11: Erstes Beispiel einer Korrelationseinheit des optischen Sensors.

Figur 12: Zweites Beispiel einer Korrelationseinheit des optischen Sensors.

Figur 13: Drittes Beispiel einer Korrelationseinheit des optischen Sensors.

Figur 14a: Erstes Beispiel von Signalabschnitten in Form von Pseudocode-Sequenzen.

Figur 14b: Korrelationsergebnisse für die Signalabschnitte gemäß Figur 14a.

Figur 15a: Zweites Beispiel von Signalabschnitten in Form von Pseudocode-Sequenzen.

Figur 15b: Korrelationsergebnisse für die Signalabschnitte gemäß Figur 15a.

Figur 16a-b: Weitere Ausführungsbeispiele für Signalabschnitte.

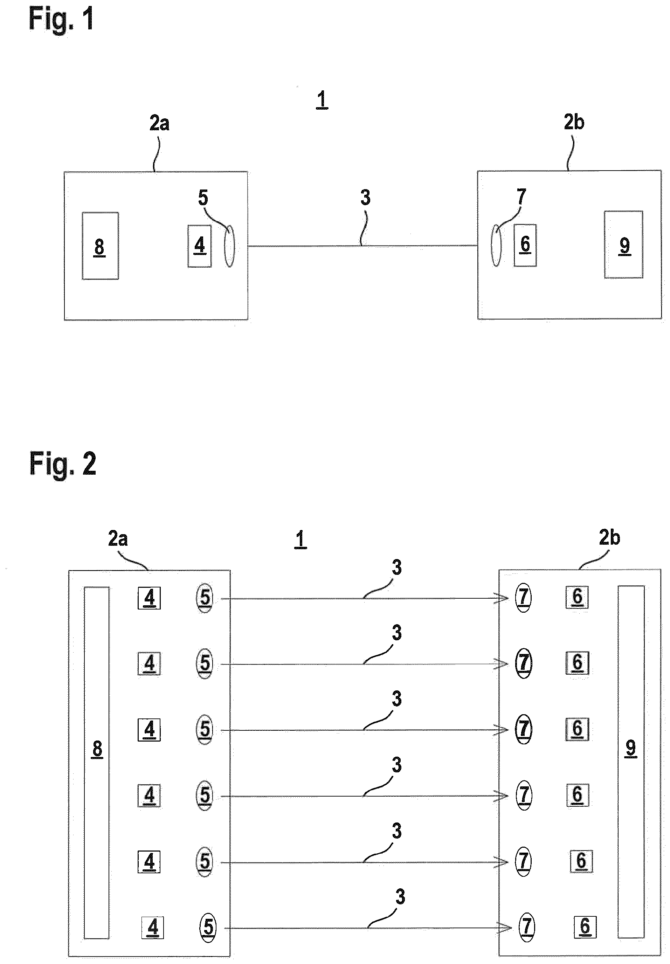

Figur 1 zeigt ein Ausführungsbeispiel des erfindungsgemäßen optischen Sensors 1 in Form einer Lichtschranke.

Die Lichtschranke weist ein erstes Gehäuse 2a auf, in welchem ein Lichtstrahlen 3 emittierender Sender 4 angeordnet ist, dem eine Sendeoptik 5 zugeordnet ist.

Weiterhin weist die Lichtschranke ein zweites Gehäuse 2b auf, in dem ein Lichtstrahlen 3 empfangender Empfänger 6 mit einer vorgeordneten Empfangsoptik 7 angeordnet ist.

Die Gehäuse 2a, 2b sind an gegenüberliegenden Rändern eines Überwachungsbereichs so angeordnet, dass bei freiem Überwachungsbereich die Lichtstrahlen 3 analog einer Messstrecke verlaufend ungehindert auf den Empfänger 6 treffen. Bei einem Objekteingriff im Überwachungsbereich werden die Lichtstrahlen 3 unterbrochen.

Der Sender 4 wird von einer Sendersteuerung 8 gesteuert. Dem Empfänger 6 ist eine Auswerteeinheit 9 zugeordnet. Die Auswerteeinheit 9 steuert den Empfänger 6 und wertet die Empfangssignale der Empfänger 6 aus, wodurch als Objektfeststellungssignal ein binäres Schaltsignal generiert wird, dessen Schaltzustände angeben ob sich ein Objekt im Überwachungsbereich befindet oder nicht.

Die Auswerteeinheit 9 kann einen mehrkanaligen Aufbau aufweisen, falls die Lichtschranke ein Sicherheitssensor ist.

Figur 2 zeigt schematisch den Aufbau eines Ausführungsbeispiels des erfindungsgemäßen optischen Sensors 1 in Form eines Lichtvorhangs zur Erfassung von Objekten innerhalb eines Überwachungsbereich.

Der Lichtvorhang weist ein erstes Gehäuse 2a mit einer Reihenanordnung von Lichtstrahlen 3 emittierenden Sendern 4 und diesen zugeordneten Sendeoptiken 5 auf. Weiterhin weist der Lichtvorhang ein zweites Gehäuse 2b mit einer Reihenanordnung von Lichtstrahlen 3 empfangenden Empfängern 6 auf, welchen jeweils eine Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist. Dieses Sender-Empfängerpaar bildet eine Strahlachse. Im vorliegenden Fall sind sechs Strahlachsen vorgesehen. Natürlich kann der Lichtvorhang auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet die Empfangssignale 6a der Empfänger 6 zur Generierung eines binären Schaltsignals aus, dessen Schaltzustände angeben, ob sich ein Objekt im Überwachungsbereich befindet oder nicht. Generell kann diese Auswertung nicht nur in einer zeitlichen Sequenz nacheinander für mehrere Lichtstrahlen, sondern auch gleichzeitig für mehrere Lichtstrahlen erfolgen. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang einen Sicherheitssensor bildet.

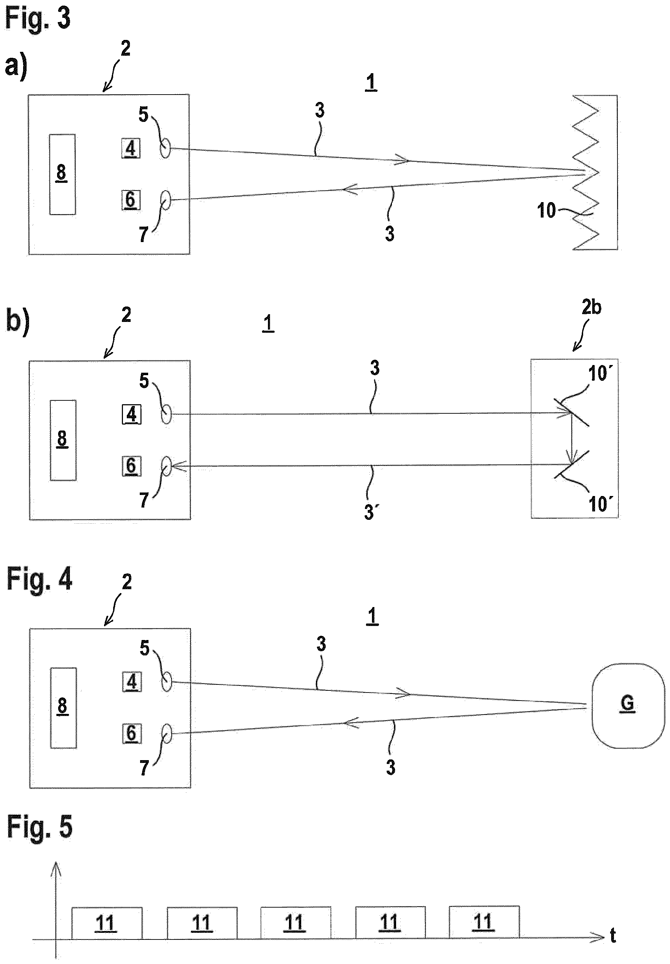

Figur 3a zeigt einen optischen Sensor 1 in Form einer Reflexions-Lichtschranke. Der Sender 4 und der Empfänger 6 des optischen Sensors 1 sind im Unterschied zur Ausführungsform gemäß Figur 1 in einem gemeinsamen Gehäuse 2 integriert, das an einem Rand des Überwachungsbereichs angeordnet ist, wobei am gegenüberliegenden Rand des Überwachungsbereichs ein Reflektor 10 angeordnet ist. Bei freiem Überwachungsbereich werden die Lichtstrahlen 3 des Senders 4 entlang einer Messstrecke durch den Überwachungsbereich geführt, am Reflektor 10 reflektiert und von dort zum Empfänger 6 geführt. Ansonsten entspricht die Ausführungsform der Figur 3a der Ausführungsform gemäß Figur 1.

Figur 3b zeigt eine Variante der Ausführungsform gemäß Figur 3a. Anstelle eines Reflektors 10 sind in diesem Fall Umlenkspiegel 10' vorhanden. Die Umlenkspiegel 10' können dabei in einem Gehäuse 2b angeordnet sein. Bei entsprechender Anordnung und Anzahl an Sendern, Empfänger und Umlenkspiegeln 10' können damit auch mehr als zwei Lichtstrahlen 3, 3' angeordnet werden.

Figur 4 zeigt einen optischen Sensor 1 in Form eines Lichttasters. Analog zur Ausführungsform gemäß Figur 3 sind der Sender 4 und Empfänger 6 in einem gemeinsamen Gehäuse 2 integriert. In diesem Fall wird eine Messstrecke mit Lichtstrahlen 3 vom Sender 4 zum Empfänger 6 nur dann gebildet, wenn die Lichtstrahlen 3 an einem zu detektierenden Gegenstand G reflektiert und zurück zum Empfänger 6 geführt sind. Auch in diesem Fall wird in der Auswerteeinheit 9 ein binäres Schaltsignal generiert, dessen Schaltzustände angeben, ob im Überwachungsbereich ein Objekt vorhanden ist oder nicht.

Auch diese Ausführungsform des optischen Sensors 1 kann auf mehrere Sender-Empfängerpaare erweitert werden.

Erfindungsgemäß emittiert der oder jeder Sender 4 Lichtstrahlen 3 in Form von Folgen von Signalabschnitten 11, die den Lichtstrahlen 3 aufmoduliert sind. Ein Beispiel hierfür zeigt Figur 5

Vorteilhaft sind die Signalabschnitte 11 mit Pseudonoise-Sequenzen moduliert.

Beispiele für Pseudonoise-Sequenzen sind Barker-Sequenzen, Hadamard-Walsh-Sequenzen, Kasami-Sequenzen, M-Sequenzen, Gold-Sequenzen oder Willard-Codes.

Die Signalabschnitte 11 können auch zeitlich veränderlich sein, insbesondere in Form von Chirps, die als lineare oder logarithmische Chirps ausgeführt sein können.

Empfangsseitig, insbesondere in der Auswerteeinheit 9 des optischen Sensors 1, sind diese Signalabschnitte 11 hinterlegt, d.h. gespeichert oder generiert werden.

Erfindungsgemäß wird für eine Objektdetektion das Empfangssignal der oder jedes Empfängers 6 mit der entsprechenden hinterlegten oder generierten Folge der Signalabschnitte 11 des diesem Empfänger 6 zugeordneten Senders 4 in der Auswerteeinheit 9 korreliert.

Werden die Lichtstrahlen 3 des jeweiligen Senders 4 über eine Messstrecke zum Empfänger 6 geführt, liefert die Korrelation als Korrelationsergebnis D ein Korrelationsmaximum, da Signalabschnitte 11 im Empfangssignal einen hohen Korrelationsgrad mit der in der Auswerteeinheit 9 hinterlegten Folge der Signalabschnitte 11 aufweist. Ist die Messstrecke unterbrochen oder liegt eine Störlichteinstrahlung vor, wird dies mit einem Korrelationsergebnis D angezeigt, das einem niedrigen Korrelationsgrad entspricht.

Bei den optischen Sensoren 1 gemäß den Figuren 1 bis 3a, 3b wird eine nicht unterbrochene Messstrecke bei freiem Überwachungsbereich erhalten. Bei dem optischen Sensor 1 gemäß Figur 4 wird eine nicht unterbrochene Messstrecke dann erhalten, wenn die Lichtstrahlen 3 vom Gegenstand G zurück zum Empfänger 6 reflektiert werden.

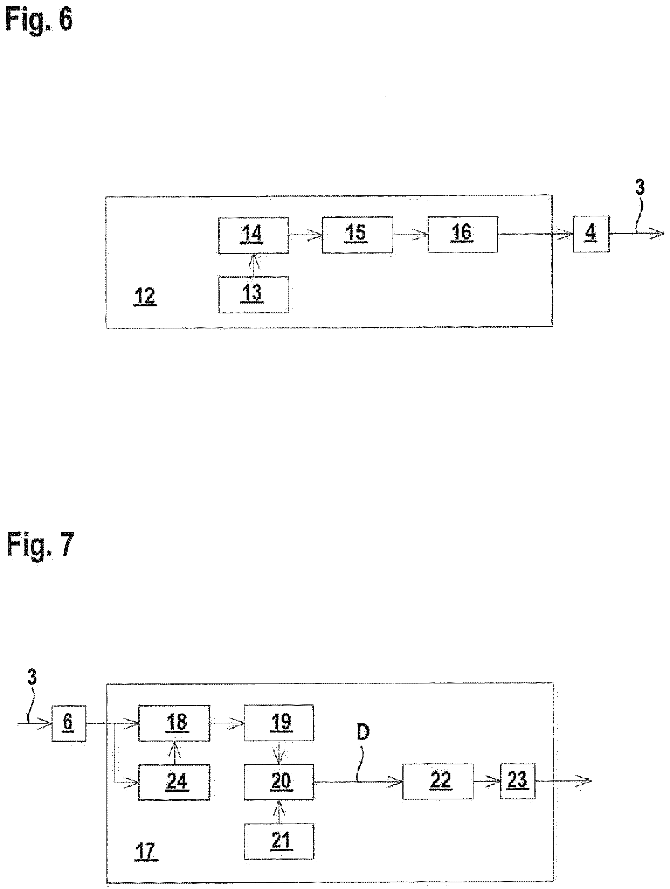

Figur 6 zeigt eine Senderansteuerung 12 zur Generierung der Signalabschnitte 11 in den Lichtstrahlen 3.

In einer Speichereinheit 13 sind die jeweiligen Signalabschnitte 11 in digitaler Form gespeichert. In einer Generatoreinheit 14 werden abhängig vom Inhalt der Speichereinheit 13 die Signalabschnitte 11 periodisch generiert und in einem optional vorhandenen n-bit Digital-Analog-Wandler 15 in ein analoges Signal gewandelt, das mit einem Sendemodulator 16 den Lichtstrahl 3 des Senders 4 aufmoduliert wird. In einer anderen Ausführungsform können die Signalabschnitte z.B. mit rückgekoppelten Schieberegistern generiert werden.

Zudem kann (in Figur 6 nicht dargestellt) dem oder den Sendern 4 eine Nachbearbeitungseinheit zugeordnet sein, in welcher eine analoge Nachverarbeitung der digitalen Signalabschnitte 11 durchgeführt wird.

Dabei kann die Nachbearbeitungseinheit einen Bandpassfilter oder einen Tiefpassfilter aufweisen.

Zudem kann in der Nachbearbeitungseinheit ein Offset erzeugt werden, durch welchen unipolare analoge Signalabschnitte 11 erhalten werden. Besonders vorteilhaft ist ein zeitlich variierender Offset, um damit die mittlere Strombelastung des Sensers zu reduzieren.

Figur 7 zeigt eine empfangsseitige Schaltungsanordnung 17 für den optischen Sensor 1 der Figuren 1 bis 4.

Die Lichtstrahlen 3 treffen auf einen der jeweiligen Empfänger 6 auf. In Figur 6 ist nur ein Empfänger 6 dargestellt, entsprechend der Ausführungsformen der Figuren 1, 2, 3a, 3b, 4. Bei einem optischen Sensor 1 mit mehreren Sender-Empfängerpaare ist die empfangsseitige Schaltungsanordnung 17 auf mehrere Empfänger 6 erweitert. Das im Empfänger 6 generierte Empfangssignal wird in einer Vorverarbeitungseinheit 18 vorverarbeitet.

Vorteilhaft weist die Vorverarbeitungseinheit 18 eine Filtereinheit auf.

Optional kann eine Synchronisationseinheit 24 vorgesehen sein, die die Phasenlage der Empfangssignale bildender Pulse und der ausgesendeten Pulse ermittelt und einen Abtastzeitpunkt für die Pulse festlegt. Eine solche Synchronisation kann beispielsweise mit einer PLL oder DPLL erfolgen. In Anordnungen entsprechend den Figuren 3a, 3b, 4 ist eine derartige Synchronisation nicht erforderlich, da die Pulserzeugung im gleichen Gehäuse erfolgt und damit der Sendezeitpunkt direkt an den Empfänger übermittelt werden kann und nicht erst ermittelt werden muss.

Zudem kann mit der Vorverarbeitungseinheit 18 ein Offset erzeugt werden, durch welchen unipolare Empfangssignale durch Subtraktion mit einer konstanten voreingestellten Größe in bipolare Empfangssignale umgewandelt werden. Diese Offsetkompensation könnte auch im digitalen Teil erfolgen. Erfolgt im Empfänger eine Synchronisierung, kann dann auch ein zeitlich veränderlicher Offset hinterlegt sein, der entsprechend der Synchronisation kompensiert wird.

In einer Speichereinheit 19 werden die dadurch erhaltenen Empfangsdaten abgespeichert. Die Speichereinheit kann auch Bestandteil des Korrelators 20 sein. Diese werden einer Korrelationseinheit 20 zugeführt, die Bestandteil der Auswerteeinheit 9 des optischen Sensors 1 ist. Der Korrelationseinheit 20 werden weiterhin aus einer Speichereinheit 21 dort hinterlegte Signalabschnitte 11 zugeführt, die den Signalabschnitt 11 des dem Empfänger 6 zugeordneten Senders 4 entsprechen. Für den Fall, dass mehrere Empfänger 6 vorhanden sind, sind für jeden Empfänger 6 entsprechende Signalabschnitte 11 in der Speichereinheit 21 gespeichert, die dann der Korrelationseinheit 20 zugeführt werden.

In der Korrelationseinheit 20 wird das Empfangssignal mit der Folge der Signalabschnitte 11 aus der Speichereinheit 21 korreliert. Das dadurch generierte Korrelationssignal D wird einem Auswerter 22 zugeführt, der auch Bestandteil der Korrelationseinheit 20 sein kann.

Das so generierte Korrelationsergebnis D wird im Auswerter 22 zur Generierung des Objektfeststellungssignals, insbesondere des binären Schaltsignals genutzt, dass über einem Ausgang 23 des optischen Sensors 1 ausgegeben wird.

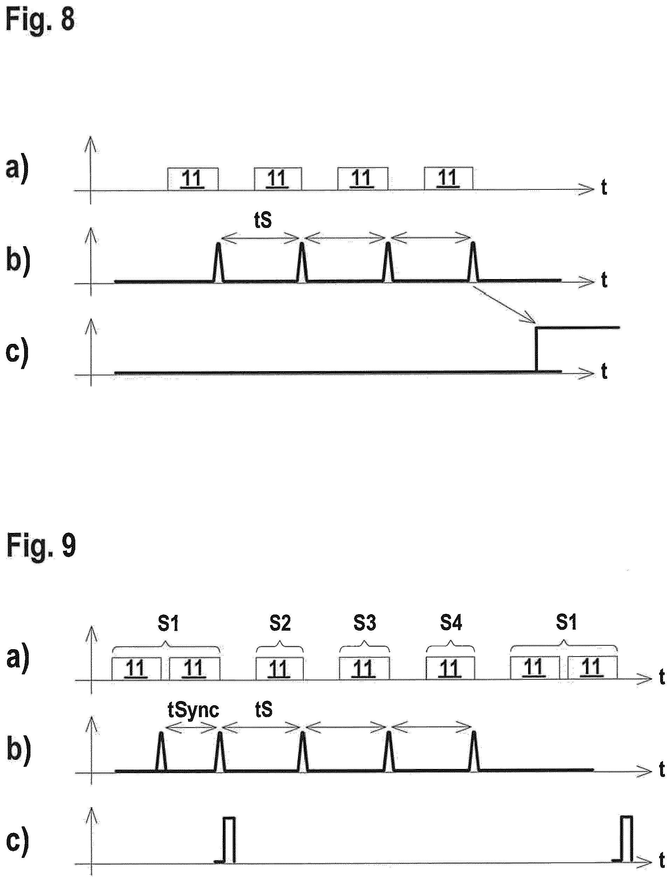

Die Figuren 8a bis 8c zeigen ein Beispiel dieser Signalauswertung für einen optischen Sensor 1 in Form einer Lichtschranke.

Figur 8a zeigt die zeitliche Folge der zum Sender 4 emittierten Signalabschnitte 11. Figur 8b zeigt das in der Korrelationseinheit 20 gewonnene Korrelationssignal. Figur 8c zeigt ein aus den einzelnen Korrelationssignalen zusammengefasstes Ergebnis.

In der Auswerteeinheit 9 ist als Erwartungshaltung für einen freien Überwachungsbereich definiert, dass mindestens zwei Korrelationssignale mit Maximalwerten mit einem zeitlichen Abstand tSync und alle nachfolgend Signale im Abstand tS registriert werden. Ist dies der Fall, wechselt der Schaltausgang zum Signalzustand 0 auf den Signalzustand 1 (entsprechend einem freien Überwachungsbereich), wie in Figur 8c dargestellt.

Die Figuren 9a bis 9c zeigen ein Beispiel einer Signalauswertung für einen Lichtvorhang mit vier Sendern 4 (wie Figur 8a mit S1 bis S4 bezeichnet). Jeder Sender 4 sendet Signalabschnitte 11, die den Lichtstrahlen 3 aufgeprägt sind.

Der mit S1 bezeichnete erste Sender 4 dient zur optischen Synchronisierung des Lichtvorhangs, d.h. dessen Lichtstrahlen 3 bilden einen Synchronisationsstrahl. Der Sender 4 S1 sendet 2 Signalabschnitte 11 im Abstand tSync.

Die Korrelationseinheit 20 erkennt im Korrelationssignal zwei Maxima M getrennt durch tSync (Figur 9b) und identifiziert dadurch die Lichtstrahlen 3 des Senders S1 als Synchronisationsstrahl, wodurch ein Synchronisationssignal generiert wird (Figur 9c). Danach erfolgt mit den weiteren Sendern 4 S2 bis S4 eine Objekterkennung analog zur Ausführungsform gemäß den Figuren 8a bis 8c.

In der Korrelationseinheit 20 erfolgt die Korrelation eines Empfangssignals mit der Folge der hinterlegten Signalabschnitte 11.

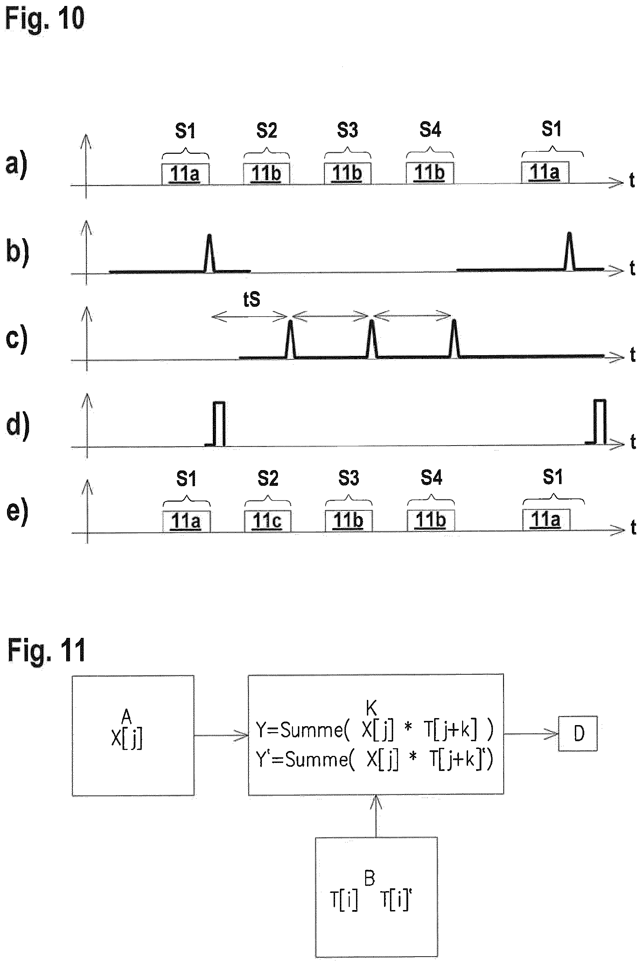

Die Figur 10 zeigt ein weiteres Ausführungsbeispiel einer Signalauswertung für einen Lichtvorhang mit vier Sendern 4 (in Figur 10 mit S1... S4) bezeichnet. Bei dieser Ausführungsform emittiert der zur optischen Synchronisierung herangezogene erste Sender 4 S1 Signalabschnitte 11a, die sich von den Signalabschnitten 11b der weiteren Sender 4 S2...S4 unterscheiden. Durch Signalabschnitte 11c, die alternativ zu 11b verwendet werden, könnten durch entsprechend codierte Wechsel von 11b und 11c zusätzliche Informationen übertragen werden (siehe z.B. Figur 10e, S2 Wechsel 11b zu 11c), ohne die Funktion der Detektion der Strahlunterbrechung zu beeinträchtigen. In diesem Fall würde das Fehlen jedes Signalabschnitts 11a, 11b oder 11c (Figur 10e) für die Objektfeststellung verwendet werden. Unabhängig von der Objektdetektion könnten damit Abfolgen von 11b, 11c serielle Daten übertragen werden, wobei z.B. 11b einer logischen 1 und 11c logisch 0 entspräche. Eine derartige Datenkodierung könnte natürlich auch auf nur einem Lichtstrahl 3 erfolgen, indem von Zyklus zu Zyklus die Abfolge gewechselt wird.

In der Korrelationseinheit 20 wird der Signalabschnitt 11a des ersten Senders 4 erkannt und es wird ein entsprechendes Korrelationssignal (Figur 10b) und daraufhin ein Synchronisationssignal (Figur 10d) generiert. Darauf werden in der Korrelationseinheit 20 Korrelationssignale für die weiteren Sender 4 S2... S4 generiert (Figur 10c), anhand derer analog zur Ausführungsform gemäß Figur 8 die Objekterkennung und die Generierung des Schaltsignals erfolgt.

In der Korrelationseinheit 20 erfolgt die Korrelation eines Empfangssignals mit der Folge der hinterlegten Signalabschnitte 11 zur Synchronisation, sowie in Folge der hinterlegten Signalabschnitte 11b oder 11c zur Erkennung der anderen Strahlen.

Die Korrelation zweier kontinuierlicher Signale X(t), Y(t) erfolgt in bekannter Weise nach der Beziehung (wobei die konjugiert komplexe Funktion von x ist):

$$\mathrm{R}_{xy}(\tau) = \int_{-\infty}^{+\infty} z\,(t) \circ \mathrm{y(t+\tau)} \circ \mathrm{d}t$$

Die Korrelation zweier zeitdiskreter Signalfolgen X und Y erfolgt in bekannter Weise (siehe: Digitale Signalverarbeitung, Kammeyer und Kroschel, 4. Auflage Teubner 1998, S. 39, ISBN 3-519-36122-1) nach der Beziehung (wobei Z die konjugiert komplexe Folge von X ist):

$$\mathrm{R}_k^{xy} = \sum_{m=0}^{N-1} Z_m \cdot Y_{k+m}$$

Figur 11 zeigt die Funktionsweise einer Korrelationseinheit 20, die in Form von Softwaremodulen, die auf einem Microprozessor oder dergleichen implementiert sind.

Durch Umschaltvorgänge können Korrelationsfunktionen Y, Y' für unterschiedliche Signalabschnitte 11 parallel oder durch Umschaltung ermittelt werden. Die Korrelationsfunktionen Y, Y' zur Generierung der Korrelationssignale werden, wie in Figur 11 angegeben, aus den Messwerten X[j] und den hinterlegten Signalabschnitten 11 T[i] oder T'[i] berechnet, wodurch Korrelationsergebnisse D erhalten werden.

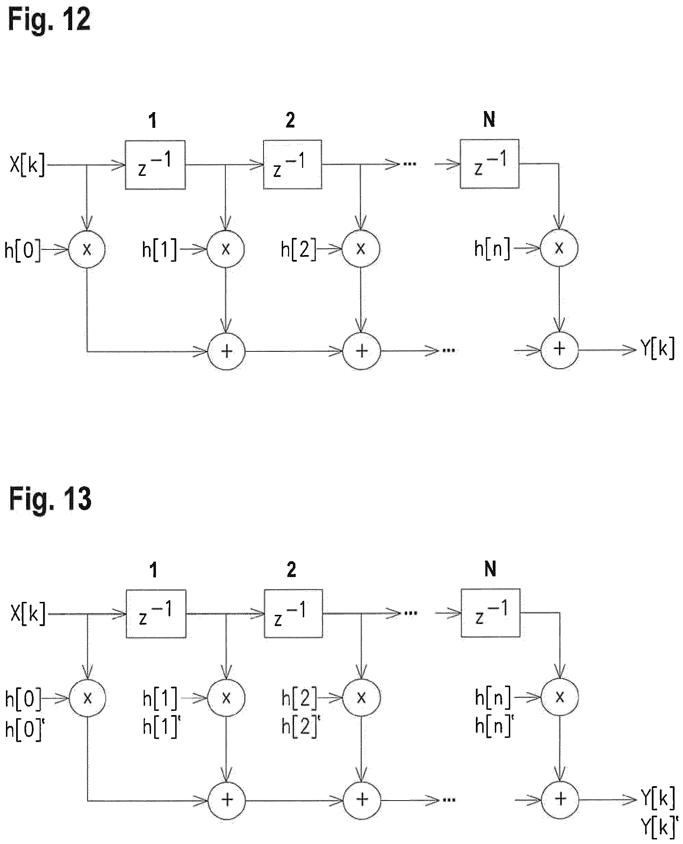

Figur 12 zeigt eine Ausführung einer Korrelationseinheit 20 in Form eines FIR-Filters. Die Messwerte X(k) werden dem FIR-Filter mit Filterkoeffizienten $z^{-1}$ zugeführt. Die Signalabschnitte 11 werden als Koeffizienten h(n) zugeführt. Als Ergebnis wird die Korrelationsfunktion Y(k) erhalten.

Figur 13 zeigt eine Erweiterung der Ausführungsform gemäß Figur 12. Der FIR-Filter gemäß Figur 13 weist eine gemultiplexte Struktur derart auf, wobei unterschiedliche Koeffizienten h(n) bzw. h(n)' entsprechend unterschiedlichen Signalabschnitten 11 gemultiplext im FIR-Filter aktiviert werden, so dass dann beide Koeffizienten h(n) und h(n)' mit den Messwerten X(k) korreliert werden, d.h. die Messwerte werden mit unterschiedlichen Signalabschnitten parallel korreliert oder sequentiell umgeschaltet werden, wodurch zwei verschiedene Korrelationsfunktionen Y(k), Y(k)' erhalten werden. Natürlich können auch mehr als zwei Signalabschnitte auf diese Weise mit den Messwerten korreliert werden.

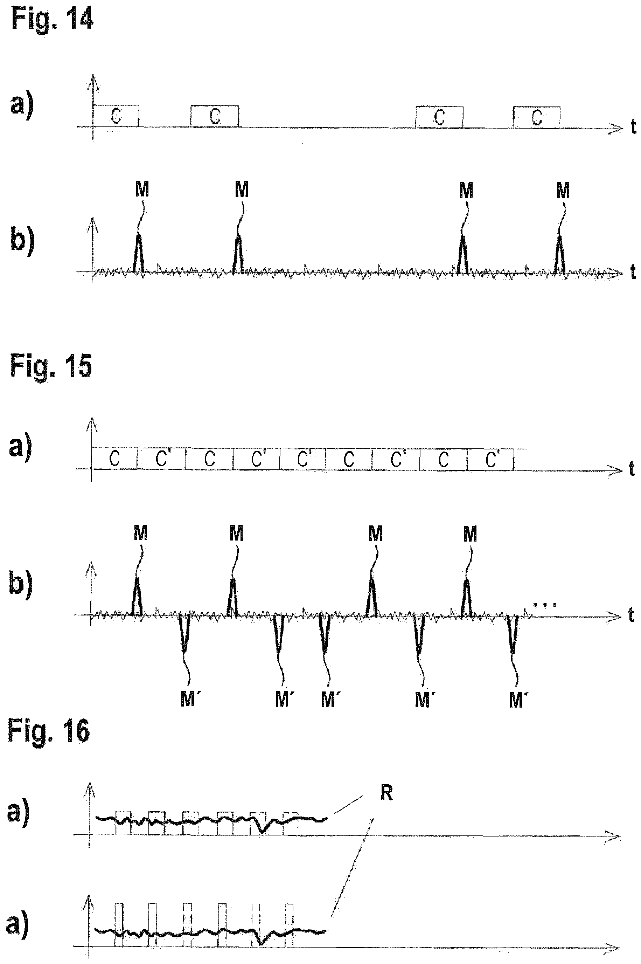

Die Figuren 14a, 14b zeigen ein Ausführungsbeispiel, in welchem dem Lichtstrahl 3 Signalabschnitte 11 in Form von kodierten Folgen von Pseudocode-Sequenzen C (entsprechend einem Bitwert 1), getrennt durch Pausen 0 (bei denen der Sender 4 abgeschaltet ist) emittiert werden (Figur 14a).

Bei freiem Überwachungsbereich wird für diese Signalabschnitte 11 in der Korrelationseinheit 20 das in Figur 14b dargestellte Korrelationssignal mit Maximum M erhalten.

Die Figuren 15a, 15b zeigen eine Erweiterung der Ausführungsform der Figuren 14a, 14b dahingehend, dass in den Lücken zwischen den Pulscode-Sequenzen 0-Werte nicht durch Abschaltungen des Senders 4, sondern durch im Sender 4 inverse Pseudocode-Sequenzen C' realisiert sind (Figur 14a). Die inverse Pseudocode-Sequenz C' entspricht dem Inversen der Pseudocode-Sequenz C oder ist daraus abgeleitet und lässt sich deutlich einfacher erzeugen als unterschiedliche Signalabschnitte.

Dadurch werden bei der Korrelation dieser Signalabschnitte 11 mit dem Empfangssignal als Korrelationssignal nicht nur positive Maxima M, sondern auch negative Maxima M' erhalten, wodurch das Signal-Rauschverhältnis bei der Objektdetektion weiter verbessert wird.

Ein weiterer Vorteil ist die Möglichkeit, durch entsprechend codierte Wechsel von C und C' zusätzliche Informationen zu übertragen, ohne die Funktion der Detektion der Strahlunterbrechung zu beeinträchtigen. In diesem Falle würde das Fehlen jedes M oder M' für die Objektfeststellung verwendet werden, ohne dass Pausen die Reaktionszeit des Systems verschlechtern. Unabhängig von der Objektdetektion könnten damit Abfolgen von C, C' serielle Daten übertragen werden, wobei z.B. C bzw. M einer logischen 1 und C' bzw. M' einer logischen 0 entspräche.

Eine weitere Verbesserung der Signalrauschverhältnisse erhält man, wenn die Pulse, aus denen die Signalabschnitte zusammengesetzt sind, besonders schmal sind und gleichzeitig eine hohe Amplitude besitzen, da dann die Pulsamplituden bei gleicher mittlerer Pulsleistung deutlich höher als störendes Rauschen ist.

Figur 16a zeigt eine Signalfolge bestehend aus Pulsen mit Pulspausenverhältnis von ca. 1:1 im Vergleich zu einem Rauschsignal R.

Figur 16b zeigt eine Signalfolge bestehend aus Pulsen mit gleicher mittlerer Leistung und einem Pulspausenverhältnis von 1:4. Durch die höhere Pulsamplitude sind die Pulse deutlich einfacher vom Rauschsignal R unterscheidbar.

Durch eine zusätzliche Synchronisationseinrichtung 24 werden die zeitlichen Positionen, an denen die Pulse zu erwarten sind, ermittelt und entsprechend abgetastet. Eine derartige Synchronisierung kann durch eine Phase Locked Loop (PLL) erfolgen, die auch digital in FPGA, ASIC oder in Software realisiert ist (DPLL).

Bezugszeichenliste

(1)     optischer Sensor
(2)     Gehäuse
(2a)    Gehäuse
(2b)    Gehäuse
(3)     Lichtstrahl
(4)     Sender
(5)     Sendeoptik
(6)     Empfänger
(7)     Empfangsoptik
(8)     Sendersteuerung
(9)     Auswerteeinheit
(10)    Reflektor
(10')   Umlenkspiegel
(11)    Signalabschnitt
(11a)   Signalabschnitt
(11b)   Signalabschnitt
(11c)   Signalabschnitt
(12)    Senderansteuerung
(13)    Speichereinheit
(14)    Generatoreinheit
(15)    Wandler
(16)    Sendemodulator
(17)    Schaltungsanordnung
(18)    Vorverarbeitungseinheit
(19)    Speichereinheit
(20)    Korrelationseinheit
(21)    Speichereinheit
(22)    Auswerter
(23)    Ausgang
(24)    Synchronisationseinheit
(C)     Pseudocode-Sequenz
(C')    Pseudocode-Sequenz
(D)     Korrelationsergebnis
(G)     Gegenstand
(M)     positive Maxima
(M')    negative Maxima
(R)     Rauschsignal

Patentansprüche

1. Optischer Sensor (1) mit wenigstens einem Lichtstrahlen (3) emittierenden Sender (4), wenigstens einem Lichtstrahlen (3) empfangenden Empfänger (6) und einer Auswerteeinheit (9), in welcher abhängig von Empfangssignalen des Empfängers (6) ein Objektfeststellungssignal generiert wird, **dadurch gekennzeichnet, dass** die Lichtstrahlen (3) mit einer Folge von Signalabschnitten (11) moduliert sind, dass empfangsseitig entsprechende Signalabschnitte (11) hinterlegt sind, und dass in der Auswerteeinheit (9) das Empfangssignal des Empfängers (6) mit den empfangsseitig hinterlegten Signalabschnitten (11) korreliert wird und abhängig von einem dadurch erhaltenen Korrelationsergebnis (D) beurteilt wird, ob die vom Sender (4) emittierten Lichtstrahlen (3) über eine Messstrecke zum Empfänger (6) geführt sind oder nicht.

2. Optischer Sensor (1) nach Anspruch 1, **dadurch gekennzeichnet, dass** der Sender (4) und der Empfänger (6) eine Lichtschrankenanordnung ausbilden.

**3.** Optischer Sensor (1) nach Anspruch 1, **dadurch gekennzeichnet, dass** der Sender (4) und der Empfänger (6) eine Reflexions-Lichtschrankenanordnung oder eine Lichtschrankenanordnung mit Umlenkspiegeln (10') ausbilden.

**4.** Optischer Sensor (1) nach Anspruch 1, **dadurch gekennzeichnet, dass** der Sender (4) und der Empfänger (6) eine Lichttasteranordnung ausbilden.

**5.** Optischer Sensor (1) nach einem der Ansprüche 1 bis 4, **dadurch gekennzeichnet, dass** dieser mehrere Sender-Empfängerpaare ausbildende Sender (4) und Empfänger (6) aufweisen.

**6.** Optischer Sensor (1) nach einem der Ansprüche 1 bis 5, **dadurch gekennzeichnet, dass** dem oder den Sendern (4) eine Signalgenerierungseinheit in Form eines Schieberegisters, eines rückgekoppelten Schieberegisters, eines Mikroprozessors, eines FPGA oder eines ASIC zugeordnet ist, in welcher digitale Signalabschnitte (11) generiert werden.

**7.** Optischer Sensor (1) nach einem der Ansprüche 1 bis 6, **dadurch gekennzeichnet, dass** die Auswerteeinheit (9) eine Korrelationseinheit (20) aufweist, in welcher das Empfangssignal des Empfängers (6) mit in der Korrelationseinheit (20) hinterlegten oder generierten Signalabschnitten (11) korreliert werden.

**8.** Optischer Sensor (1) nach Anspruch 7, **dadurch gekennzeichnet, dass** die Korrelationseinheit (20) in einem FPGA oder ASIC vorhanden ist oder von Softwaremodulen in einem Mikroprozessor gebildet ist.

**9.** Optischer Sensor (1) nach Anspruch 8, **dadurch gekennzeichnet, dass** die Erfassung der Empfangssignale in Form von Pulsen synchron zu den ausgesendeten Pulsen erfolgt.

**10.** Optischer Sensor (1) nach Anspruch 9, **dadurch gekennzeichnet, dass** die Festlegung von Erfassungszeitpunkten durch eine Synchronisationseinheit (24) erfolgt.

**11.** Optischer Sensor (1) nach einem der Ansprüche 6 bis 10 **dadurch gekennzeichnet, dass** dem oder den Sendern (4) eine Nachbearbeitungseinheit zugeordnet ist, in welcher eine analoge Nachverarbeitung der digitalen Signalabschnitte (11) durchgeführt wird.

**12.** Optischer Sensor (1) nach Anspruch 11, **dadurch gekennzeichnet, dass** die Nachbearbeitungseinheit einen Bandpassfilter oder einen Tiefpassfilter aufweist.

**13.** Optischer Sensor (1) nach einem der Ansprüche 11 oder 12, **dadurch gekennzeichnet, dass** in der Nachbearbeitungseinheit ein konstanter oder variabler Offset erzeugt und subtrahiert oder addiert wird, durch welchen unipolare analoge Signalabschnitte (11) erhalten werden.

**14.** Optischer Sensor (1) nach einem der Ansprüche 1 bis 13, **dadurch gekennzeichnet, dass** dem oder jedem Empfänger (6) eine Vorverarbeitungseinheit (18) zugeordnet ist, in welcher eine analoge Vorverarbeitung von Empfangssignalen durchgeführt wird.

**15.** Optischer Sensor (1) nach Anspruch 14, **dadurch gekennzeichnet, dass** die Vorverarbeitungseinheit (18) eine Filtereinheit aufweist.

**16.** Optischer Sensor (1) nach einem der Ansprüche 14 oder 15, **dadurch gekennzeichnet, dass** mit der Vorverarbeitungseinheit (18) ein konstanter oder variabler Offset erzeugt addiert oder subtrahiert wird, durch welchen unipolare Empfangssignale erhalten werden.

**17.** Optischer Sensor (1) nach einem der Ansprüche 1 bis 16, **dadurch gekennzeichnet, dass** die Signalabschnitte (11) in Form von Pseudonoise-Sequenzen ausgebildet sind.

**18.** Optischer Sensor (1) nach Anspruch 17, **dadurch gekennzeichnet, dass** die Pseudonoise-Sequenzen Barker-Sequenzen, Hadamard-Walsh-Sequenzen, Kasami-Sequenzen, M-Sequenzen, Gold-Sequenzen oder Willard-Codes sind.

**19.** Optischer Sensor (1) nach einem der Ansprüche 1 bis 18, **dadurch gekennzeichnet, dass** die Signalabschnitte (11) durch Chirps zeitlich veränderlich sind.

**20.** Optischer Sensor (1) nach Anspruch 19, **dadurch gekennzeichnet, dass** lineare oder logarithmische Chirps vorhanden sind.

**21.** Optischer Sensor (1) nach einem der Ansprüche 1 bis 20, **dadurch gekennzeichnet, dass** in der Auswerteeinheit (9) als Objektfeststellungssignal ein binäres Schaltsignal generiert wird, dessen Schaltzustände angeben, ob die oder wenigstens eine Messstrecke unterbrochen ist oder nicht.

**22.** Optischer Sensor (1) nach einem der Ansprüche 5 bis 20, **dadurch gekennzeichnet, dass** dieser mehrere Messstrecken ausbildende Sender-Empfängerpaare aufweist, und dass durch Auswertung, welche der Messstrecken unterbrochen sind oder nicht, als Objektfeststellungssignal Abmessungen von Objekten bestimmt werden.

**23.** Optischer Sensor (1) nach einem der Ansprüche 5 bis 20, **dadurch gekennzeichnet, dass** die Lichtstrahlen (3) wenigstens eines Sender-Empfängerpaars einen Synchronisationsstrahl bilden, anhand dessen die Sender (4) und Empfänger (6) optisch synchronisiert werden, wobei der Synchronisationsstrahl anhand seiner Signalabschnitte (11) oder durch den zeitlichen Abstand von Signalabschnitten identifizierbar ist.

**24.** Optischer Sensor (1) nach einem der Ansprüche 1 bis 23, **dadurch gekennzeichnet, dass** Signalabschnitte (C) und invertierte Signalabschnitte (C') verwendet werden

**25.** Optischer Sensor (1) nach einem der Ansprüche 1 bis 24, **dadurch gekennzeichnet, dass** mittels der Signalabschnitte (11, 11a, 11b, 11c, C, C') eine Datenübertragung von Codes durchgeführt wird.

**26.** Optischer Sensor (1) nach einem der Ansprüche 1 bis 25, **dadurch gekennzeichnet, dass** in der Korrelationseinheit (20) Signalabschnitte (11, 11a, 11b, 11c, C, C') parallel ausgewertet werden.

**27.** Optischer Sensor (1) nach einem der Ansprüche 1 bis 26, **dadurch gekennzeichnet, dass** die Signalabschnitte (11, 11a, 11b, 11c, C, C') sich eindeutig von Signalabschnitten (11, 11a, 11b, 11c, C, C') anderer optischer Sensoren (1) unterscheiden.

**28.** Optischer Sensor (1) nach Anspruch 27, **dadurch gekennzeichnet, dass** sich Lücken zwischen Signalabschnitten eindeutig von Lücken zwischen Signalabschnitten anderer optischer Sensoren (1) unterscheiden.

**29.** Verfahren zum Betrieb eines optischer Sensors (1) mit wenigstens einem Lichtstrahlen (3) emittierenden Sender (4), wenigstens einem Lichtstrahlen (3) empfangenden Empfänger (6) und einer Auswerteeinheit (9), in welcher abhängig von Empfangssignalen des Empfängers (6) ein Objektfeststellungssignal generiert wird, **dadurch gekennzeichnet, dass** die Lichtstrahlen (3) mit einer Folge von Signalabschnitten (11) moduliert sind, dass empfangsseitig entsprechende Signalabschnitte (11) hinterlegt sind, und dass in der Auswerteeinheit (9) das Empfangssignal des Empfängers (6) mit den empfangsseitig hinterlegten Signalabschnitten (11) korreliert wird und abhängig von einem dadurch erhaltenen Korrelationsergebnis (D) beurteilt wird, ob die vom Sender (4) emittierten Lichtstrahlen (3) über eine Messstrecke zum Empfänger (6) geführt sind oder nicht.

**Fig. 1**

**Fig. 2**

**Fig. 3**

a)

b)

**Fig. 4**

**Fig. 5**

Fig. 6

```
                                                                          3
                                                                          ⌇
   ┌──────────────────────────────────────────────────────┐   ┌───┐
   │          ┌──────┐     ┌──────┐     ┌──────┐           │   │ 4 │──→
   │          │  14  │──→  │  15  │──→  │  16  │───────────┼──→└───┘
   │          └──────┘     └──────┘     └──────┘           │
   │             ↑                                         │
   │          ┌──────┐                                     │
   │   12     │  13  │                                     │
   │          └──────┘                                     │
   └──────────────────────────────────────────────────────┘
```

Fig. 7

```
   3
   ⌇
        ┌───┐   ┌─────────────────────────────────────────────────────┐
    ──→ │ 6 │──→│   ┌──────┐     ┌──────┐                              │
        └───┘   │   │  18  │──→  │  19  │      D                       │
                │   └──────┘     └──────┘      ⌇                       │
                │      ↑            ↓                                  │
                │   ┌──────┐     ┌──────┐     ┌──────┐   ┌──────┐      │
                │   │  24  │     │  20  │────→│  22  │──→│  23  │───→   │
                │   └──────┘     └──────┘     └──────┘   └──────┘      │
                │                   ↑                                  │
                │                ┌──────┐                             │
                │     17         │  21  │                             │
                │                └──────┘                             │
                └─────────────────────────────────────────────────────┘
```

## Fig. 8

a)

b)    tS

c)

## Fig. 9

a)    S1    S2    S3    S4    S1

b)    tSync    tS

c)

# Fig. 10

a) S1 S2 S3 S4 S1
   11a 11b 11b 11b 11a
   t

b) t

c) tS
   t

d) t

e) S1 S2 S3 S4 S1
   11a 11c 11b 11b 11a
   t

# Fig. 11

A
X[j]

K
$Y = Summe(\ X[j] * T[j+k]\ )$
$Y' = Summe(\ X[j] * T[j+k]'\ )$

D

B
$T[i]\quad T[i]'$

# Fig. 12

# Fig. 13

Fig. 14

a)

b)

Fig. 15

a)

b)

Fig. 16

a)

a)

R

Europäisches Patentamt
European Patent Office
Office européen des brevets

# EUROPÄISCHER RECHERCHENBERICHT

Nummer der Anmeldung

EP 23 15 5484

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 000855 A1 (SICK AG [DE]) 23. August 2012 (2012-08-23)  * Zusammenfassung; Ansprüche 1,8; Abbildungen 1,3 * * Absätze [0002], [0006], [0015], [0026], [0041] * ----- | 1-10, 14-18, 21-23, 26-29 | INV. G01V8/12 G01V8/14 G01V8/20 G01V8/22 |
| X | EP 2 103 962 B1 (SICK AG [DE]) 17. August 2011 (2011-08-17)  * Zusammenfassung; Ansprüche 1,2,12,14; Abbildungen 1-3 * * Absatz [0070] * ----- | 1,2, 5-11,14, 17,18, 21,23-29 | |
| X | EP 2 015 110 B1 (SICK AG [DE]) 17. April 2013 (2013-04-17)  * Zusammenfassung; Anspruch 1; Abbildungen 1,2,5,6,10 * * Absätze [0003], [0010], [0013], [0055], [0069], [0081], [0091] * ----- | 1,2, 5-21, 23-29 | |

RECHERCHIERTE SACHGEBIETE (IPC)

G01V

Der vorliegende Recherchenbericht wurde für alle Patentansprüche erstellt

| Recherchenort | Abschlußdatum der Recherche | Prüfer |
|---|---|---|
| Den Haag | 4. Juli 2023 | Fernandes, Paulo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 5484

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2023

| Im Recherchenbericht angeführtes Patentdokument | Datum der Veröffentlichung | Mitglied(er) der Patentfamilie | Datum der Veröffentlichung |
|---|---|---|---|
| DE 102011000855 A1 | 23-08-2012 | DE 102011000855 A1 | 23-08-2012 |
| | | EP 2490046 A1 | 22-08-2012 |
| EP 2103962 B1 | 17-08-2011 | AT 521000 T | 15-09-2011 |
| | | DE 102008015286 A1 | 01-10-2009 |
| | | EP 2103962 A1 | 23-09-2009 |
| EP 2015110 B1 | 17-04-2013 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KAMMEYER ; KROSCHEL.** *Digitale Signalverarbeitung,* 1998, ISBN 3-519-36122-1, 39